# EUROPÄISCHE PATENTANMELDUNG

(11) **EP 0 604 839 A1**
(43) Veröffentlichungstag der Anmeldung: **06.07.1994**
(21) Anmeldenummer: 93120253.5
(22) Anmeldetag: 16.12.1993
(51) Int. Cl.: G02F 1/35, C08F 220/36, C08F 218/18

(54) **Verfahren zur Herstellung vernetzter Polymerschichten mit nichtlinear optischen Eigenschaften und deren Verwendung**

(30) Priorität: 24.12.1992 DE 4244197
(71) Anmelder: BASF Aktiengesellschaft, D-67063 Ludwigshafen (DE)
(72) Erfinder: Etzbach, Karl-Heinz, Dr., D-67227 Frankenthal (DE); Kilburg, Heike, Dr., D-67346 Speyer (DE); Lorkowski, Hans-Joachim, Prof. Dr., D-13156 Berlin (DE); Pfeiffer, Karl, Dr., D-12489 Berlin (DE)

(57) **Zusammenfassung**

Die Erfindung betrifft ein Verfahren zur Herstellung vernetzter Polymerschichten mit nichtlinear optischen Eigenschaften, wobei Diallylester aromatischer Dicarbonsäuren oder deren Gemische mit Monoallylmonoalkylestern aromatischer Dicarbonsäuren mit polymerisationsfähige Gruppierungen enthaltenden nichtlinear optisch aktiven Verbindungen copolymerisiert werden oder (B) Prepolymere von Diallylestern aromatischer Dicarbonsäuren oder Prepolymere von Gemischen aus Diallylestern aromatischer Dicarbonsäuren und Monoallylmonalkylestern aromatischer Dicarbonsäuren mit nichtlinear optisch aktiven Verbindungen mit oder ohne polymerisationsfähigen Gruppen vermischt (= Gast/Wirt-System), auf ein Substrat aufgebracht und nach Orientierung in einem elektrischen Feld oberhalb einer Temperatur von 50⁰C thermisch oder radikalisch initiiert vernetzt werden.

## Beschreibung

Die Erfindung betrifft ein Verfahren zur Herstellung vernetzter Polymerschichten mit nichtlinear optischen Eigenschaften durch Copolymerisation, Dotierung oder intra- bzw. intermolekulare Reaktion mit chromophoren Verbindungen hoher Hyperpolarisierbarkeit, Orientierung im elektrischen Feld und anschließender Vernetzung und deren Verwendung. Solche Systeme sind in vielen Anwendungsbereichen der Optoelektronik, einschließlich optischer Kommunikationstechnik, Positionierung und Steuerung von Lasern sowie in der integrierten Optik von Interesse.

Materialien, die nichtlinear optisches Verhalten zeigen, sind durch eine feldstärkeabhängige dielektrische Suszeptibilität gekennzeichnet, wodurch sie von großem anwendungstechnischen Interesse in der Optoelektronik und Signalverarbeitung sind. Eine Reihe anorganischer Substanzen wie z.B. Kaliumdihydrogenphosphat oder Lithiumniobat zeigen nichtlinear optische Eigenschaften. Diese Verbindungen sind jedoch mit den verschiedensten Nachteilen wie z.B. ihrer schwierigen Herstellung und Verarbeitung und hygroskopischen Eigenschaften behaftet. Polymere, die mit gelösten oder kovalent gebundenen NLO-Chromophoren mit hoher Hyperpolarisierbarkeit versehen sind, erhalten erst durch Anlegen eines elektrischen Feldes bei Temperaturen im Bereich des Glasübergangs, wobei die chromophoren Struktureinheiten dipolar orientiert werden, nichtlinear optische Eigenschaften. Die z.Z. bekannten Materialien zeigen noch unbefriedigende nichtlinear optische Eigenschaften und werden den gestellten Anforderungen nicht gerecht. Dies betrifft insbesondere die bisher unzureichende Langzeitstabilität der gewünschten nichtlinear optischen Eigenschaften.

Aus der Fülle der chromophoren Verbindungen mit ausgedehnten π-Systemen und unsymetrischer Ladungsverteilung sind die bekanntesten Vertreter, wie das 2-Methyl-4-nitroanilin, das 4-N,N-Dimethylamino-4'-nitrostilben, das 4-N,N-Dimethylamino-4'-nitroazobenzol und das 4-N,N-Ethyl-hydroxyethylamino-4'-nitroazobenzol als Gastverbindung in einem Wirtspolymeren oder fixiert durch Copolymerisation bzw. polymeranaloge Umsetzung an eine Polymerhauptkette untersucht worden (D.J. Williams, Angew. Chemie 96 (1984) 636). Der Hauptnachteil der Gast/Wirt-Systeme besteht darin, daß das Gastmolekül nur eine geringe Verträglichkeit zu den meist eingesetzten aliphatischen Polymeren besitzt und durch rasche Relaxation der gepolten Polymere die NLO-Eigenschaften verloren gehen.

Eine geringfügige Verbesserung ergibt sich durch Fixierung der Chromophoren an die Polymerkette. Eine bessere Stabilisierung wird bei vernetzten Systemen erreicht.

Durch Polyaddition bifunktioneller Epoxidmonomerer mit bifunktionellen aromatischen, chromophoren Aminen wurden solche Systeme realisiert (vgl. z.B. SPIE 1147 Nonlinear optical Properties of organic Materials II (1989) 77). Nachteilig sind die verhältnismäßig lange Reaktionszeit, die zu einer Vernetzung benötigt wird, und der gleichzeitige Ablauf dieser Reaktionen während der Orientierung unter Polungsbedingungen (EP 0313 475 - A2). Mit einem hohen Syntheseaufwand wird dieser Nachteil durch eine polymeranaloge Umsetzung linearer Epoxid-NLO-Prepolymerer mit Cinnamoyl- bzw. Cinnamylidenacetylchlorid umgangen. Nach der erzwungenen Orientierung der Chromophoren im elektrischen Feld erfolgt die Vernetzung inter- und intramolekular durch Photovernetzungsreaktionen (vgl. B.K. Mandel, Makrom.chem.Rapid.Comm. 12 (1991) 607).

Der vorliegenden Erfindung lag die Aufgabe zugrunde, unter Berücksichtigung der oben angeführten Nachteile auf einfachere Art und Weise nichtlinear optische Systeme zu realisieren, die eine ausgezeichnete Stabilität der nichtlinear optischen Eigenschaften besitzen und eine hohe Suszeptibilität zweiter Ordnung erreichen.

Die Aufgabe der vorliegenden Erfindung besteht insbesondere darin, ein Verfahren zur Herstellung eines NLO-Polymersystems aufzufinden, bei dem während der Polungsphase im elektrischen Feld noch keine Vernetzung der Polymermatrix auftritt, wodurch die Orientierung der hyperpolarisierbaren Struktureinheiten im Polymeren nicht behindert wird und der erreichte orientierte Zustand durch weiteres Erwärmen im elektrischen Feld bei gleichzeitigem Anstieg der Glastemperatur stabilisiert wird.

Die Aufgabe wird erfindungsgemäß dadurch gelöst, daß hierfür verzweigte Prepolymere auf der Basis mehrfunktionneller Allylester, insbesondere Homo- und Copolymerisate vom Phthalsäure-(DAP), Isophthalsäure-(DAIP) und Terephthalsäurediallylester (DATP) eingesetzt werden, die je nach Funktionalität der chromophoren Verbindung einen unterschiedlichen vernetzten Strukturaufbau der Polymermatrix ergeben.

Gegenstand der vorliegenden Erfindung ist ein Verfahren zur Herstellung vernetzter Polymerschichten mit nichtlinear optischen Eigenschaften, das dadurch gekennzeichnet ist, daß (A) Diallylester aromatischer Dicarbonsäuren oder deren Gemische mit Monoallylmonoalkylestern aromatischer Dicarbonsäuren mit polymerisationsfähige Gruppierungen enthaltenden nichtlinear optisch aktiven Verbindungen copolymerisiert werden oder (B) Prepolymere von Diallylestern aromatischer Dicarbonsäuren oder Prepolymere von Gemischen aus Diallylestern aromatischer Dicarbonsäuren und Monoallylmonoalkylestern aromatischer Dicarbonsäuren mit nichtlinear optisch aktiven Verbindungen vermischt (= Gast/Wirt-System), auf ein Substrat aufgebracht und nach Orientierung in einem elektrischen Feld oberhalb einer Temperatur von 50°C thermisch oder radikalisch initiiert vernetzt werden.

Bevorzugte Ausführungsformen des erfindungsgemäßen Verfahrens bestehen darin, als Diallylester aromatischer Dicarbonsäuren Diallylester der Terephthalsäure, Isophthalsäure und/oder Phthalsäure und als Monoallylmonoalkylester aromatischer Dicarbonsäuren Monoallylmonoalkylester mit 1 bis 5 Kohlenstoffatomen in der Alkylkette des Terephthalsäure-, Isophthalsäure- und/oder Phthalsäuremonoallylmonoalkylesters, insbesondere Terephthalsäure-, Isophthalsäure- und/oder Phthalsäureallylmethylester sowie als polymerisationsfähige Gruppierungen enthaltende nichtlinear optisch aktive Verbindungen Allyl-, Acrylat-, Methacrylat- oder Epoxigruppen enthaltende Stilben-, Azo- oder Azomethinverbindungen einzusetzen.

Als nichtlinear optisch aktive Verbindungen kommen solche Verbindungen in Betracht, die nach (A) ein sehr gutes Copolymerisationsverhalten gegenüber aromatischen Diallylestern aromatischer Dicarbonsäuren oder deren Gemische mit Monoallylalkylester besitzten oder nach (B) eine ausgezeichnete Verträglichkeit gegenüber Prepolymeren von Diallylestern aromatischer Dicarbonsäuren oder Prepolymeren von Gemischen aus Diallylestern aromatischer Dicarbonsäuren und Monoallylalkylestern aromatischer Dicarbonsäuren besitzen. Dies sind insbesondere solche, die der allgemeinen Formel 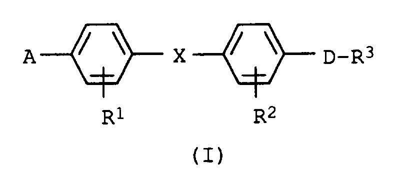
worin
- R¹, R² und R³: untereinander gleich oder verschieden sind und für Wasserstoff oder Allyl-, Acrylat-, Methacrylat und Epoxigruppen stehen können;
- X: für -N=N-, -CH=CH- oder -N=CH-;
- A: für eine Acceptorgruppe;
- D: für eine Donatorgruppe stehen, in Frage.

Zur Herstellung der Copolymerisate nach (A) kommen besonders solche nichtlinear optisch aktive Verbindungen der allgemeinen Formel in Frage, in der entweder für R¹, R² und/oder R³ zwei Wasserstoff und eine polymerisationsfähige Gruppe wie z.B. Methacrylat, Acrylat oder Allyl oder ein Wasserstoff und zwei polymerisationsfähige Gruppen mit unterschiedlicher Polymerisationsneigung wie z.B. Methacrylat und Allyl, Methacrylat und Epoxid oder Acrylat und Allyl stehen.

Für die Acceptorgruppe A sind Nitrogruppen bevorzugt.

Beim erfindungsgemäßen Verfahren zur radikalsich initiierten Vernetzung wird vorzugsweise ein radikalliefernder Polymerisationsinitiator in einer Menge von 0,2 bis 5, vorzugsweise 2 bis 5 Gew.-%, bezogen auf Copolymer (A) oder Prepolymer (B) eingesetzt.

Gegenstand der vorliegenden Erfindung ist außerdem die Verwendung von nach dem erfindungsgemäßen Verfahren hergestellten vernetzten Polymerschichten mit nichtlinear optischen Eigenschaften zum Aufbau von elektrooptischen Schaltern oder elektrooptischen Modulatoren.

Nach dem erfindungsgemäßen Verfahren lassen sich hochvernetzte Schichten und Filme mit nichtlinear optischen Eigenschaften herstellen, die z.B. in der Optoelektronik zum Aufbau von elektrooptischen Schaltern für die Frequenzverdopplung von Laserdioden, elektrooptischen Modulatoren und in der optischen Signalverarbeitung einsetzbar sind.

Zum erfindungsgemäßen Verfahren ist im einzelnen folgendes auszuführen.

Als Diallylester aromatischer Dicarbonsäuren eignen sich insbesondere Phthalsäurdiallylester (=DAP), Isophthalsäurediallylester (=DAIP) und Terephalsäurediallylester (=DATP). Diese Diallylester können teilweise, d.h. bis zu 50 Gew.-% durch Monoallylmonoalkylester der Phthalsäure, Isophthalsäure und Terephthalsäure ersetzt sein, wobei als Alkylreste der Monoallylmonoalkylester solche mit 1 bis 5 Kohlenstoffatomen, vorzugsweise Methylreste in Frage kommen.

Beispiele für nichtlinear optisch aktive Verbindungen der allgemeinen Formel (I) sind: 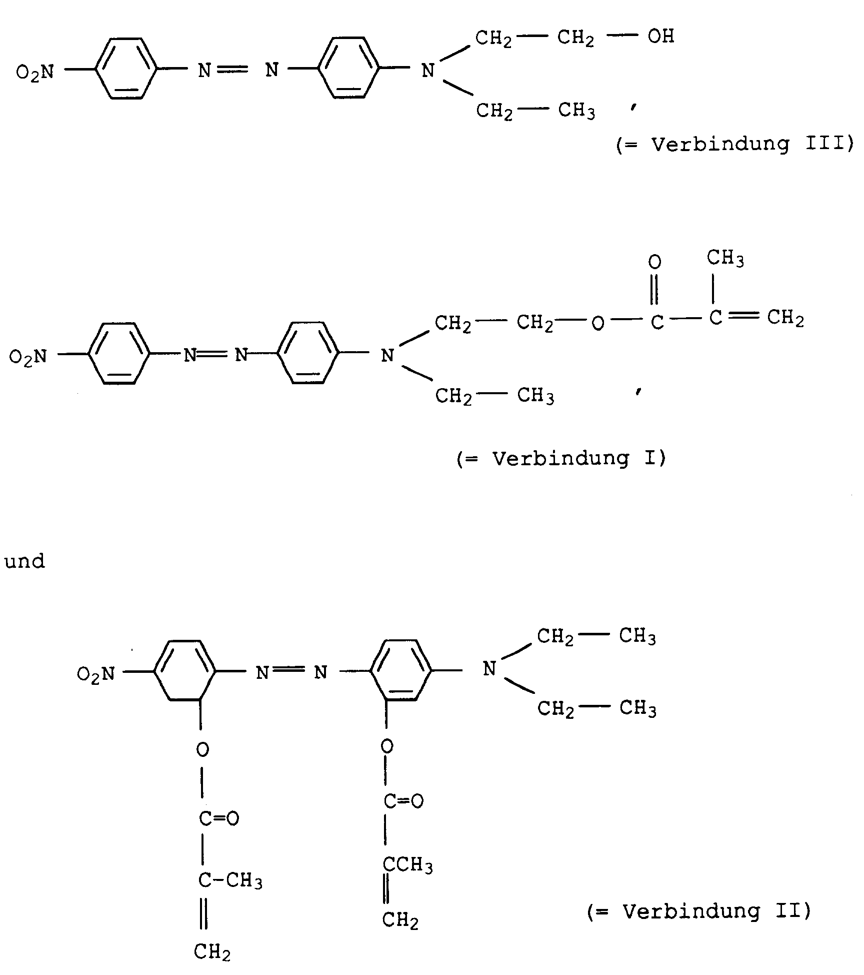
Die nichtlinear optisch aktiven Verbindungen der allgemeinen Formel (I) sind in den erfindungsgemäß hergestellten Polymerschichten im allgemeinen in Mengen von 3 bis 60, vorzugsweise 5 bis 45 Mol-%, bezogen auf Gesamtmenge des Copolymerisats (nach (A) durch Copolymerisation erhalten), kovalent gebunden, bzw. (nach (B)) in Mengen von 5 bis 40, vorzugsweise 10 bis 30 Mol-%, bezogen auf das Prepolymer, enthalten.

Die Allylesterdoppelbindungen besitzen eine sehr gute Copolymerisationsneigung gegenüber Methacrylat-, Acrylat- und Vinylgruppen. Besonders günstig ist die Copolymerisation mit chromophoren Verbindungen, die Allylestergruppen enthalten. Prinzipiell können auch andere chromophore Verbindungen mit einem ausgedehnten π-Elektronensystem eingesetzt werden. Voraussetzung ist nur eine ausgezeichnete Verträglichkeit gegenüber der Polymermatrix, die im allgemeinen bei den erfindunggemäß verwendeten Prepolymeren wesentlich besser ist als in aliphatischen Polymersystemen.

Die in den folgenden Beispielen angegebenen Teile und Prozente sind, soweit nicht anders angegeben Gewichtsteile bzw. Gewichtsprozente.
I. Herstellung von Benzoldicarbonsäurediallylester-Prepolymeren.
   Jeweils 20 Teile eines Benzoldicarbonsäurediallylesters (DAP, DAIP bzw. DATP) werden in Gegenwart von 0,2 Teilen Benzoylperoxid unter Stickstoff bei 80°C innerhalb von 3 h zu einem noch löslichen verzweigten Prepolymeren polymerisiert. Das Prepolymer wird von noch vorhandenen Monomeren durch Lösen in 160 Teilen Aceton und anschließende Fällung mit 240 Teilen Methanol abgetrennt. Durch mehrmaliges Umfällen mit Aceton/Methanol wurde das Prepolymer gereinigt und schließlich bei 60°C getrocknet.
   In analoger Weise wurden Copolymere aus Terephthalsäurediallylester und Terephthalsäureallylmethylester (84/16 Gew.-%) erhalten.
   Die Eigenschaften der Prepolymeren bzw. des Copolymeren sind in Tabelle 1 angeführt.

**Tabelle 1**

| Prepolymer | Umsatz % | JZ²⁾ | -C=C-/Monomereinheit³⁾ | Tg/K Prepolym. | TG/K⁴) |
|---|---|---|---|---|---|
| PDAP | 21 | 55 | 1,4 | 336 | 368 |
| PDAIP | 15 | 81 | 1,2 | 347 | 378 |
| PDATP | 13 | 80 | 1,2 | 379 | 403 |
| PDATP/AMTP¹⁾ | 14 | | 1,3 | 333 | 376 |

| | | | | | |
|---|---|---|---|---|---|
| ¹) Copolymer aus Terephthalsäurediallylester und Terephthalsäureallylmethylester (84/16 Gew.-%) | | | | | |
| ²) Jodzahl (Jodmenge in g/pro 100 g Polymer) | | | | | |
| ³) Umsatz an Doppelbindungen je Monomereinheit | | | | | |
| ⁴) Tg = Glastemperatur nach thermischer Behandlung 1 h 453 K. | | | | | |

### Beispiel 1 (Copolymerisation)

10 g eines Monomergemisches aus 8,4 g (34 mMol) Terephthalsäurediallylester, 1,6 g (7,2 mMol) Terephthalsäureallylmethylester und 1,0 g (2,6 mMol) 4'-(2-Methacryloxyethyl)ethylamino-4-nitroazobenzol werden in Gegenwart von 0,3 g (1,2 mMol) Dibenzoylperoxid (BPO) 8 Stunden bei 80°C unter Inertgasatmosphäre behandelt. Nach Abkühlung wurde das Prepolymere in 160 g Methanol gefällt, durch mehrmaliges Lösen in Aceton und Fällen in Methanol gereinigt und bei 60⁰C im Vakuum 3 Stunden getrocknet. Das Prepolymer ist löslich in Tetrahydrofuran, Cyclohexanon sowie Ethylglykolacetat und enthält einen Anteil des Azomonomeren von 7,5 Gew.-%.

Unter analogen Bedingungen erfolgt die Herstellung eines Prepolymeren mit 1,5 g (3,0 mMol) 2,2'-Bis(methacryloxy)-4-diethylamino-4'-nitroazobenzol. Das Prepolymer ist löslich in Aceton, Cyclohexanon, Tetrahydrofuran sowie Ethylglykolacetat und enthält einen Anteil des Azomonomeren von 12,5 Gew.-%.

### Beispiel 2 (Gast/Wirt-System)

1 g Prepolymer (PDAP; Mw = 14.300, Mn = 2900, Tg 335 K) und 0,1 g einer chromophoren Verbindung (Verbindung I, II oder III) werden in 5 ml Cyclohexanon gelöst und anschließend über ein 0,5 µm-Membranfilter gereinigt. Für die Polung im elektrischen Feld werden durch Rotationsbeschichtung bei 2000 U/min 0,8-1,5 µm dicke Schichten auf ITO-Substraten (= transparentes leitfähiges Elektrodenmaterial; Indium/Zinn-Oxid, 5 x 5 cm) hergestellt.

Zur Entfernung von Lösungsmittelresten wurden die beschichteten Substrate 3 Stunden bei 333 K im Vakuum thermisch behandelt.

Die erhaltenen Ergebnisse sind in Tabelle 2 angegeben.

**Tabelle 2**

| Chromophore Verbindung | Tg nach 1 h/333 K | Tg nach 1 h/453 K |
|---|---|---|
| Verbindung III | 329 | 358 |
| Verbindung I | 325 | 365 |
| Verbindung II | 339 | 376 |
| Verbindung I + 2 % BPO | 325 | 360¹⁾ |
| Verbindung II + 2 % BPO | 332 | 366¹) |
| Verbindung III + 2 % BPO | 334 | 378¹) |

| | | |
|---|---|---|
| ¹⁾ Tg nach 1 Stunde bei 423°K. | | |

## Patentansprüche

1. Verfahren zur Herstellung vernetzter Polymerschichten mit nichtlinear optischen Eigenschaften, dadurch gekennzeichnet, daß (A) Diallylester aromatischer Dicarbonsäuren oder deren Gemische mit Monoallylmonoalkylestern aromatischer Dicarbonsäuren mit polymerisationsfähige Gruppierungen enthaltenden nichtlinear optisch aktiven Verbindungen copolymerisiert werden oder (B) Prepolymere von Diallylestern aromatischer Dicarbonsäuren oder Prepolymere von Gemischen aus Diallylestern aromatischer Dicarbonsäuren und Monoallylmonoalkylestern aromatischer Dicarbonsäuren mit nichtlinear optisch aktiven Verbindungen mit oder ohne polymerisationsfähigen Gruppen vermischt (= Gast/Wirt-System), auf ein Substrat aufgebracht und nach Orientierung in einem elektrischen Feld oberhalb einer Temperatur von 50°C thermisch oder radikalisch initiiert vernetzt werden.

2. Verfahren nach Anspruch 1, dadurch gekennzeichnet, daß als Diallylester aromatischer Dicarbonsäuren Diallylester der Terephthalsäure, Isophthalsäure und/oder Phthalsäure eingesetzt werden.

3. Verfahren nach Anspruch 1 oder 2, dadurch gekennzeichnet, daß als Monoallylmonoalkylester aromatischer Dicarbonsäuren Monoallylmonoalkylester mit 1 bis 5 Kohlenstoffatomen in der Alkylkette eingesetzt werden.

4. Verfahren nach einem der vorhergehenden Ansprüche, dadurch gekennzeichnet, daß als polymerisationsfähige Gruppierungen enthaltende nichtlinear optisch aktive Verbindungen Allyl-, Acrylat-, Methacrylat- oder Epoxigruppen enthaltende Stilben-, Azo- oder Azomethinverbindungen eingesetzt werden.

5. Verfahren nach einem der vorhergehenden Ansprüche, dadurch gekennzeichnet, daß als nichtlinear optisch aktive Verbindungen mit oder ohne polymerisationsfähigen Gruppierungen Stilben-, Azo- oder Azomethinverbindungen eingesetzt werden.

6. Verfahren nach einem der vorhergehenden Ansprüche, dadurch gekennzeichnet, daß als Monoallylmonoalkylester aromatischer Dicarbonsäuren Terephthalsäure-, Isophthalsäure- und/oder Phthalsäureallylmethylester eingesetzt wird.

7. Verfahren nach einem der vorhergehenden Ansprüche, dadurch gekennzeichnet, daß als nichtlinear optisch aktive Verbindungen solche der allgemeinen Formel (I) 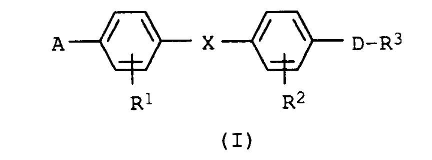 worin
R¹, R² und R³ untereinander gleich oder verschieden sind und für Wasserstoff oder Allyl-, Acrylat-, Methacrylat- und Epoxigruppen stehen können;
X für -N=N-, -CH=CH- oder -N=CH-;
A für eine Acceptorgruppe;
D für eine Donatorgruppe stehen,
eingesetzt werden.

8. Verfahren nach einem der vorhergehenden Ansprüche, dadurch gekennzeichnet, daß die Acceptorgruppe A eine Nitrogruppe ist.

9. Verfahren nach einem der vorhergehenden Ansprüche, dadurch gekennzeichnet, daß zur radikalisch initiierten Vernetzung ein radikalliefernder Polymerisationsinitiator in einer Menge von 0,2 bis 5 Gew.-%, bezogen auf Copolymer (A) oder Prepolymer (B) eingesetzt wird.

10. Verwendung von nach einem Verfahren gemäß einem der vorhergehenden Ansprüche hergestellten vernetzten Polymerschichten mit nichtlinear optischen Eigenschaften zum Aufbau von elektrooptischen Schaltern oder elektrooptischen Modulatoren.
